Europäisches Patentamt

European Patent Office

Office européen des brevets

(11) Veröffentlichungsnummer: **0 287 127**

**A2**

# EUROPÄISCHE PATENTANMELDUNG

(21) Anmeldenummer: **88106152.7**

(22) Anmeldetag: **18.04.88**

(51) Int. Cl.⁴: **B65G 65/16**

(30) Priorität: **16.04.87 DE 3712980**

(43) Veröffentlichungstag der Anmeldung:
**19.10.88 Patentblatt 88/42**

(84) Benannte Vertragsstaaten:
**FR GB IT NL SE**

(71) Anmelder: **AMR ANLAGEN- UND
MASCHINENBAU RENDSBURG GMBH & CO.
KG
Kieler Strasse 53
D-2370 Rendsburg(DE)**

(72) Erfinder: **Bechtloff, Gert, Prof. Dr.-Ing.
Lindenweg 18
D-2000 Hamburg 65(DE)**

(74) Vertreter: **Siewers, Gescha, Dr.
Rechtsanwälte Dr. Harmsen, Dr. Utescher
Dipl.-Chem. Harmsen, Bartholatus Dr.
Schaeffer, Dr. Fricke, Wolter Patentanwalt Dr.
Siewers Adenauerallee 28
D-2000 Hamburg 1(DE)**

(54) Schüttgut-Aufnahmevorrichtung.

(57) Die Schüttgut-Aufnahmevorrichtung für kontinuierliche Förderverfahren nimmt das Schüttgut im Schleuderrad achsial auf und wirft es radial in den Förderer.

Die radiale Aufnahme ist dabei nicht beeinträchtigt.

EP 0 287 127 A2

## Schüttgut-Aufnahmevorrichtung

Es ist bekannt, das Schüttgut durch Schleuderräder dem Förderer zuzuführen (P 32 18 693.2-22). Dabei können auch Hülltriebe Verwendung finden. Es ist ferner auch bekannt, der Wurfeinrichtung eine Sammeleinrichtung in Gestalt von Förderschnecken zum Zuführen des Schüttgutes beizugeben (Österreichisches Patentamt Nr. 361 842). Diese Verfahren haben den Nachteil bevorzugter Schneidrichtungen im Schüttgut. Ferner sind die durch die Aufnahme des Schüttguts zurück gelassenen Schneidkanten nicht dem Böschungswinkel des Schüttguts angepasst. Auch ist die Spantiefe nur ein geringer Bruchteil der Schleuderräderdurchmesser.

Erfindungsgemäß werden diese Nachteile dadurch beseitigt, daß das Schüttgut in Drehrichtung der Schleuderräder 1 und 2 achsial aufgenommen und radial abgeschleudert wird.

Das wird dadurch erreicht, daß die Hauptkörper 1 und 2 stirnseitig abgeschrägt sind und daß die Wurfschaufeln oder Leisten 4 herumgezogen und in Drehrichtung nach vorn gekrümmt sind. Dadurch wird ferner erreicht, daß die entstehende Fördergutsäule 3 gebündelt wird.

Dadurch daß die Schleuderräder mit den Schaufeln bzw. Leisten 4 in der Seitenansicht den Böschungswinkel $\alpha$ aufweisen, wird die Schüttgutaufnahme aus dem Schüttguthaufwerk optimal gestaltet. Es ist damit bei fliegender Lagerung der Schleuderräder möglich die Schüttiefe im Haufwerk bis nahezu dem halben Schleuderraddurchmesser zu wählen.

Ausgeprägte Vorschubrichtungen entfallen. Damit wird die Steuerung der Schüttgut-Aufnahmevorrichtung und des Förderers einfach, da die Schleuderräder weiterhin das Schüttgut auch radial aufnehmen können.

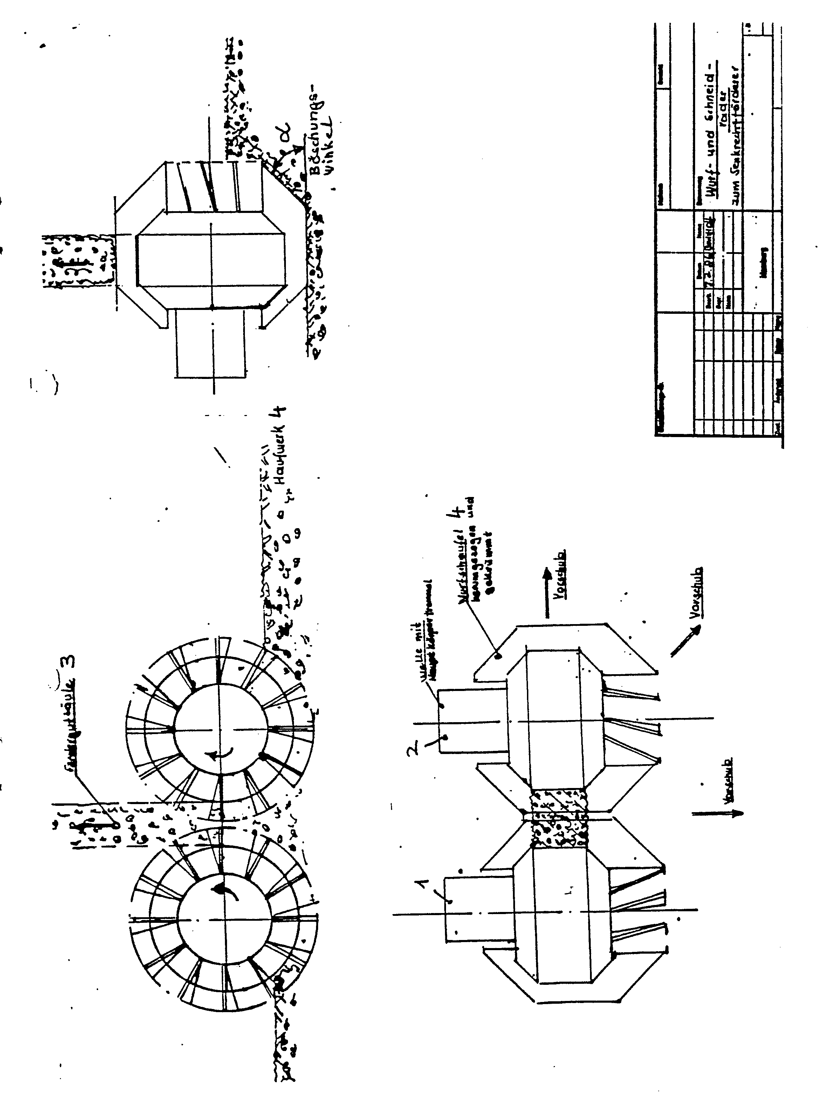

## Ansprüche

1. Schüttgut-Aufnahmevorrichtung bestehend aus einem oder zwei Schleuderräder oder Hülltriebe dadurch gekennzeichnet, daß der die Leisten oder Schaufeln tragende Hauptkörper 1 + 2 stirnseitig abgeschrägt ist.

2. Schüttgut-Aufnahmevorrichtung nach Anspruch 1 dadurch gekennzeichnet, daß die Leisten oder Schaufeln 4 in diese Abschrägung herumgezogen und gekrümmt sind.

3. Schüttgut-Aufnahmevorrichtung nach Anspruch 1 und 2 dadurch gekennzeichnet, daß die Leisten und Schaufeln den Böschungswinkel $\alpha$ aufweisen.